# EUROPEAN PATENT SPECIFICATION

(11) **EP 4 070 916 B1**
(45) Date of publication and mention of the grant of the patent: **04.03.2026**
(21) Application number: 21211340.1
(22) Date of filing: 30.11.2021
(51) Int. Cl.: B25B 5/04, B25B 5/06, B25B 5/16

(54) **DEVICE FOR CLAMPING AND CENTERING WORKPIECES IN PRODUCTION SYSTEMS, PRODUCTION SYSTEM CONTAINING IT AND METHOD OF OPERATION OF SAID DEVICE**
VORRICHTUNG ZUM SPANNEN UND ZENTRIEREN VON WERKSTÜCKEN IN FERTIGUNGSSYSTEMEN, FERTIGUNGSSYSTEM DAMIT UND VERFAHREN ZUM BETRIEB DIESER VORRICHTUNG
DISPOSITIF DE SERRAGE ET DE CENTRAGE DE PIÈCES DANS DES SYSTÈMES DE PRODUCTION, SYSTÈME DE PRODUCTION LE CONTENANT ET PROCÉDÉ DE FONCTIONNEMENT DUDIT DISPOSITIF

(30) Priority: 01.12.2020 ES 202031195
(43) Date of publication of application: 12.10.2022
(60) Divisional application: 25189918.3
(73) Proprietor: Seat, S.A., 08760 Martorell (ES)
(72) Inventor: CARCEDO MOLDON, Rubén, MARTORELL (ES); VIDAL RENOM, Juan, MARTORELL (ES); TRIGUERO LÓPEZ, Francisco, MARTORELL (ES)
(74) Representative: Pons IP

(56) References cited:
- EP-A1- 2 700 570
- DE-T2- 69 907 333
- DE-U1- 29 903 825
- FR-A1- 2 733 930
- US-A- 4 664 364
- US-A1- 2010 164 160

## Description

The present invention relates to a device for clamping and centering workpieces, which is used as a means for centering and fixing workpieces mainly in their production processes, but also in processes for treating and/or rectifying already produced workpieces.

The invention also relates to the production system containing the clamping and centering device, as well as to the method of operating said device.

### Background of the invention

The centering means known in the state of the art are used for the positioning of workpieces to be manufactured or to be rectified within a production system, wherein positioning reference points are established for the actuation of machinery or user on specific and predetermined points or areas of the workpiece, at a specific distance from the reference points. In this way, an actuation is sought at a specific point of the workpiece, based on the placement of the geometry of the workpiece, i.e. of its determined centering areas, in a position known thanks to its placement with respect to the previous points.

The indicated reference points are usually physical elements that allow performing a stop to the displacement of the workpiece within the production system, generally referred to as centering devices. In this way, the fixed location in this production system of these physical stop elements at strategic points can allow the workpiece, when coming into contact in its determined centering areas, i.e. edges, openings or the like, to place the workpiece in the desired position for the application of the process at the predetermined point or area with respect to the centering device.

These previous features are known and, therefore, form part of the state of the art of the invention, as can be seen in EP1702721 and EP2700750 wherein its main characteristics are included in the preamble part of the independent claims of the present invention.

In this configuration, since the centering devices have centerers of a specific defined form, with determined and permanent dimensions, the variability of the dimensions of the workpiece and/or of the centering areas of this workpiece, can create that the reference axes of both elements, workpiece and centering, are not the same, so that the workpiece is not positioned in its exact reference position. This creates a greater dispersion of the positions wherein the workpiece can be fixed according to its construction tolerances and, therefore, a greater dispersion with respect to the areas where the part of the corresponding manufacturing process is applied, with respect to those designed.

It is, therefore, necessary to offer an alternative to the state of the art that covers the problems found therein, by configuring a device that effectively performs the centering and fixing of the workpieces in the production system taking into account this variability in dimensions in the workpieces by the manufacturing tolerances thereof.

### Description of the invention

The object of the present invention is to provide a device for clamping and centering workpieces in production systems, as well as a production system containing it, and a method of operation of said device, which resolve the aforementioned drawbacks, offering other advantages that will be described below.

Firstly, it is important to clarify certain terms used, in order that they should not be interpreted as limitative, or that obvious changes of reference, configuration and/or application may vary the reference used in the present description without changing the essence or object of the protection, which is defined in the claims.

In the present description, a typical position of the workpiece clamping and centering system has been used as a reference, wherein a support structure is arranged horizontally as a work table. Any change of orientation of the support structure to provide a solution to the requirements of the workpieces or spaces/production designs and, therefore, of the reference names used that result from said change of orientation is considered logical.

In accordance with this objective, according to a first aspect, the present invention is based on a device for clamping and centering workpieces in production systems according to claim 1.

This device comprises a stop element arranged such that it protrudes axially from the support structure, and wherein the stop element incorporates a clamping system of the workpiece to be centered with respect to its position in the support structure.

The device, in a characterising and advantageous manner for the present invention, is based on the stop element comprising, at least, a centering body with a truncated conical shape configured to receive the coupling of a centering area of the workpiece by means of a coupling area of the centering body.

Advantageously, the stop element comprises a longitudinal displacement system of at least the centering body, maintaining the same central axis (E) of its truncated conical shape throughout its longitudinal displacement.

Also characteristically, this longitudinal displacement is carried out at least between an extracted position of the centering body with respect to the support structure, wherein a greater radius of the coupling area of the centering body axially protrudes from the support structure, and a retracted position of the centering body, wherein a smaller radius of the coupling area of the centering body axially protrudes from the support structure.

In this regard, the end position of clamping and centering of the workpiece with respect to the support structure is a position that corresponds to either of said two positions or an intermediate position between the extracted position and the retracted position. This end position coincides with the fitting position between the centering area of the workpiece with the coupling area of the centering body and, in turn, performs the support of the workpiece on the support structure.

This configuration makes it possible to have a clamping and centering device of workpieces that always achieves a correct centering despite the different measures of the workpieces and their centering areas, caused by the manufacturing tolerances thereof, adjusting the size of the coupling surface in the centering body, for the correct coupling of the workpiece in said centering body always on the size of the coupling surface, which allows maintaining the coaxiality between the axis of the centering body of the stop element and the centering axis of the workpiece.

This effect is advantageously achieved with the indicated features, thanks to having a truncated conical centering body displaceable along an axis that is the same as the one that marks the reference of the centering position of the workpiece and its centering area so that the diameter or size of the centering body varies according to its height extracted from the support structure and adapts to the possible variation in the manufacturing tolerances of the workpiece.

To clarify, it is necessary to consider included within the description of the truncated conical shape of the centering body the use of non-purely circular sections, such as truncated pyramids of different geometries in their cross-section or similar geometries, which have an increase in their peripheral dimensions as the centering body is extracted, in order to establish a progression in said dimension and to be able to adapt the dimensions of the coupling area of the centering body to those of the centering area of the workpiece in said progressive way.

The clamping system anchors and presses on this workpiece and against the centering body, which causes the workpiece to be located in the area of the centering body of maximum possible diameter or geometry, into which the centering area of the workpiece can enter the centering body of increasing geometry as it protrudes further from the support structure.

The coupling area of the centering body is thus its own outer, truncated conical or similar surface, and the centering area of the workpiece is formed by openings or geometries in perimeters with inner walls defining a hole, groove or the like of the workpiece. In any case, the geometry of the centering area of the workpiece must be complementary to the coupling area of the centering body. For example, if the coupling area has a circular truncated conical geometry, the centering area of the workpiece must be circular. In this way, the fitting position occurs when contact is made between these walls of the opening of the workpiece and the outer surface in the area of the truncated conical centering body of the same, or similar, radius as the hole of the workpiece, being the maximum radius wherein it can enter.

The displacement of the centering body is carried out to adjust the size of the geometry of the body that is extracted outside the support structure, both for the coupling of the workpiece, and so that, once this workpiece is fixed on the centering body, the assembly is displaced integrally until the workpiece rests on the support structure.

With regard to the support structure, it is intended to clarify that it comprises the surfaces, platforms or the like that allow the support of the workpieces to be produced or rectified and that allow the incorporation of the centering and clamping devices.

Likewise, it should be clarified that the stop element can be assimilated to a protuberance, pin, bolt or the like, arranged so as to protrude from the support structure following an inclination axis determined by the shape of the workpiece and position of the centering area of the workpiece, preferably being this axis orthogonal in accordance with the plane of the centering area which is usually horizontal.

When it is indicated that the centering body has longitudinal displacement, this is normally considered along an appreciably vertical axis, since the stop element containing said centering body of a pin or protuberance emerges orthogonally from the usually horizontal surface of the support structure is treated. The centering body in its displacement maintains the same central axis of its truncated conical shape and/or of the stop element, which is in turn the same as the reference axis of the positioning of the workpiece to be centered and fixed, thereby maintaining said displacement axis coaxially with the centering axis whatever the diameter of the centering body extracted in said longitudinal displacement along this axis.

The centering body moves between two positions, one more extracted than the other, thus adjusting the size of the coupling truncated conical geometry available for the coupling of the workpiece and thus being able to adapt to variations in the size of the centering area of the workpiece. The initial positions can be retracted or extracted, as will be seen later described, it being possible that said positions can be the maximum extracted or retracted, or positions that are relatively more extracted/retracted than the initial ones, depending on how the system is configured, without the need for the maximum end positions, performing the described function and generating the same technical effect of progressive increase/decrease of the coupling area available in the centering body.

Within a possible embodiment of the invention, the longitudinal displacement system and the workpiece clamping system are governed by an automated control system that receives information on the status and position thereof, said automated control system comprising one or more processing elements configured to receive and process said external information and/or predetermined data and communicate instructions both to said longitudinal displacement system and to the workpiece clamping system to be fixed, wherein said control system determines the end position of clamping and centering of the workpiece with respect to the support structure.

This control system provides the device with an automation in the clamping and centering process of the workpiece making it possible to determine the end position of maximum fit of the workpiece in the centering body and the support of the assembly in the support structure, performing the necessary coupling and clamping force and thus not damaging the workpiece to be clamped and centered.

Preferably, this configuration is advantageously based on the control system that determines the end position of clamping and centering the workpiece with respect to the support structure, comprising a device for detecting the position of the longitudinal displacement system of the centering body of the stop element, as well as the position and pressure exerted by the clamping system that presses the workpiece against the coupling area of the centering body.

With this configuration, monitoring of the position of the longitudinal displacement system is achieved, as well as of the clamping system that presses the workpiece against the coupling area of the centering body. The control system knowing this position of the centering body and the clamping system in its clamping position of the workpiece, with the possibility of knowing by default or not the width of the workpiece to be clamped and centered, it is possible to know the position of the workpiece and relative distance between them and thus determine the height of the centering body whereto the workpiece is coupled and, therefore, the position of the workpiece and the retraction displacement that the centering body must make to perform its positioning in the support structure.

This monitoring of position and status data of the device elements by the control system allows other possible ways to determine the end position of the workpiece and the centering body in the support structure such as the one corresponding to that which, knowing the fixing position of the clamping system when it opens on the workpiece and presses it, indicates the downward movement of the assembly to the support position on the support structure, thanks to knowing said fixing position and the thickness of the workpiece, previously determined.

Alternatively, the end position could also be determined by retracting the assembly of the centering body and workpiece coupled to it, until the conventional detection of a mechanical stop, such as the support structure, although this simpler solution may imply that the workpiece undergoes a greater force on the anchoring points of the clamping system.

According to an embodiment of the invention, the position detection device of the longitudinal displacement system of the centering body and/or of the position of the clamping system, when in the external fixing position, is based on a position monitoring system by reed sensors.

This option of monitoring the position of the elements by means of reed sensors, which make it possible to determine the previous positions, takes advantage of the use of conventional and reliable magnetic field detection elements of a magnet conveniently installed in the position control means, so that the configuration of the control system to perform this monitoring is simple and economical.

Alternatively, to be able to monitor the position of these elements as well as determine the end support position in the support structure, alternative systems can be used such as the measurement of the pressure made by the clamping system on the workpiece or the electrical voltage of the system that opens the clamping system, which will vary at the time of the workpiece resting on the support structure and find this mechanical resistance. Also alternatively, and among others, there may be systems for measuring the pressure of the workpiece on the centering body that would vary at the time of the workpiece resting on the support structure.

According to a possible alternative embodiment of the invention, the longitudinal displacement system of the centering body is governed by a manual actuation system for adjusting the height of the centering body and actuating its clamping system.

In this possible embodiment, the displacement of the centering body and the actuation of the clamping system is allowed manually, so that it can be the user who, in view of the workpiece, can perform the different phases of positioning and fixing of the workpiece in the support structure and determine the end position.

Preferably, the stop element comprises, either inside or forming part of its outer structure, the workpiece clamping system, wherein this clamping system can move from its non- clamping position into the stop element, to an outer clamping position wherein pressure is applied against the workpiece towards the coupling area of the centering body.

These features allow the clamping system to be integrated in the stop element, so that an auxiliary system must not be available for its fixing, avoiding the problem of a possible auxiliary installation that could disturb or prevent the placement of the workpiece in the support structure.

With respect to embodiments of the invention that may have an automated control system, the longitudinal displacement system of the centering body of the stop element and/or the clamping system in its opening/closing mechanism of the anchoring elements, comprise a pneumatic cylinder system, which allows this displacement of the centering body and/or this opening/closing movement of the anchoring elements following a coaxial guide to the axis of the stop element, with the control system automatically regulating the air pressure that moves the corresponding plunger or element integrally to the centering body of the pneumatic cylinder.

This pressure of the pneumatic system that causes the displacement of the pneumatic cylinder, both in the longitudinal displacement system and in the clamping system, will be variable through an electro-pneumatic transducer to control the air pressure progressively in the pneumatic cylinder, this pressure being defined in proportion to an electrical signal defined as a function of the workpiece's mass. The setpoint pressure will be sent by the control system and if it is a fixed application this pressure can be set on the transducer directly.

With respect to this pneumatic piston displacement solution, any linear longitudinal displacement system and its adjustment and actuation means must be considered as equivalent, whether hydraulic or electro-mechanical.

According to the invention, the centering body has a relative movement with respect to the stop element by relative displacement with respect to the rest of the stop element, as well as coaxial movement on the outside of this stop element fixed to the support structure.

This makes it possible to have different possible configurations depending on the type of workpiece to be placed, as well as possible configurations of the device, being able to leave the stop element fixed for a first placement of the workpiece, and that the displacement of the centering body is a posteriori, without moving the stop element, that manages to make the coupling with the workpiece in its ideal diameter and bring the assembly into contact with the support structure.

Therefore, and with respect to this first aspect of the invention, the previous configurations achieve a fixing and centering device with a positioning on the stop element always on its diameter coinciding with the different diameters that the centering area of the workpiece may have by varying its tolerances, so that the positioning of the workpiece will not vary in the case of varying the dimensions of the workpiece by its tolerances in manufacture, by maintaining the centering point of the device and the centering area of the workpiece coaxially.

According to the objects of the invention, according to a second aspect, the present invention is based on a production system, which has a support structure for the positioning of workpieces whereon to perform an operation, and which comprises at least one clamping and centering device.

This production system characteristically has that the at least one clamping and centering device comprises the features corresponding to the first aspect of the invention described above.

With these advantageous features, a system is achieved that incorporates the advantageous elements of the clamping and centering device described, making it possible to have a system wherein workpieces can be produced or rectified and that are correctly centered and fixed, although the centering areas of the workpiece have certain variations in their dimensions due to the usual tolerances of their previous manufacture. This effect is achieved through a dynamic adjustment of the centering body that allows having the stop element and the centering axis of the workpiece on the same axis, overcoming the differences in tolerances of the opening or the like that comprises the centering axis. All this thanks to it having a truncated conical geometry, being able to adjust the diameter or shape of the perimeter section that is extracted from the support structure, in order to be able to couple the workpiece in its greatest diameter and thus adapt to the measurement of the centering area of the workpiece.

Also with respect to the objects of the invention, according to a third aspect, the present invention is based on a method of operating a clamping and centering device, such as that disclosed above in the first aspect of the invention.

This method advantageously has that the clamping and centering device performs at least the following steps:
a) placing the workpiece, whereon it is intended to work in the production system, with its centering area on the stop element;
b) when the workpiece is in the actuation area of the clamping system of the stop element, actuate this extraction of the clamping system so as to press the workpiece towards the support structure, such that the centering area of the workpiece is coupled to the coupling area of the centering body in the fitting position of this centering area at the greatest possible radius of the truncated conical centering body, corresponding to the coincident dimension of this centering area of the workpiece with the coupling area; and
c) retracting the centering body of the stop element to the end position of the workpiece resting on the support structure while maintaining the centering area of the workpiece coupled to the coupling area of the centering body in the fitting position of this centering area in the greatest possible radius of the centering body.

In order to clarify the terms, the actuation area of the stop element clamping system means the area wherein the centering area of the workpiece is between the exit space of the stop element clamping system and the support structure, so that the actuation of the clamping system presses the workpiece against the centering body and the assembly can be retracted towards the end position in the support structure.

These stages allow the centering of the workpiece, thanks to the coaxiality of the stop element, centering body and centering axis of the opening of the workpiece, and there may be different ways of moving the centering body, as will be seen below.

According to a preferred embodiment of the invention, prior to the placement of the workpiece in the stop element of the clamping device, the centering body is extracted to its extracted position with respect to the support structure, so that at the time of placement of the workpiece in the production system, this workpiece will be located on the centering body, continuing with its consecutive stages until its end position in the support structure.

According to an alternative embodiment of the invention, it is possible to configure the method so that initially the centering body is arranged in its retracted position, so that after the placement of the workpiece in the stop element of the clamping and centering device and before performing the actuation of the clamping system, the extraction is performed of the centering body from the retracted initial position to an intermediate extracted position between the fully extracted position and the retracted position with respect to the support structure, the workpiece being coupled in the coupling area of the centering body, and allowing the actuation of the clamping system and continuing with its consecutive stages to its end position in the support structure.

These alternative embodiments allow a centering and clamping of the workpiece with the same principle of coaxiality, but with the special characteristic of having to overcome in each alternative embodiment, a height for the placement of the different workpiece according to the extraction position of said centering body. This is beneficial in productive systems designed for an introduction of the workpiece in the device by systems that do not lift the workpiece, for said positioning in the device, which requires an initial total retraction of the stop element.

Preferably for the invention, at least the steps involving the extraction and retraction displacement of the centering body of the stop element and the extraction of the clamping system are governed by an automated control system.

Also preferably, and thanks to the automated adjustment provided by the control system, the end position of clamping and centering of the workpiece in the retraction displacement of the centering body of the stop element, once the clamping system presses the workpiece against its coupling area, is determined by the control system through the information received, at least, from the detection device of the position of the longitudinal displacement system of the centering body of the stop element, as well as from the position of the clamping system that presses the workpiece against the coupling area of the centering body. This determination of the end clamping position is ascertained by any of the methods seen in the first aspect of the invention, with reference to the description of the device control system.

As indicated, the information received, its processing and the instructions given by the control system allow both said monitoring and the determination of the end position by the different methods that can be designed having this information of the position of the device elements.

In an optional, although preferred embodiment of the invention, the steps involving the extraction and retraction displacement of the centering body of the stop element, and/or the actuation of the clamping system of the stop element, are performed by the displacement of a rectilinear displacement pneumatic cylinder, wherein the air pressure acting by longitudinally displacing the centering body is regulated by the automated control system.

In this way, a system is provided that includes the advantages of the indicated device, as well as a method that allows, with this device, different embodiments of the system and a determination of the centering position of the workpiece, ensuring coaxiality between the centering axis of the workpiece and the axis of the stop element.

### Brief description of the drawings

For the better understanding of the description made herein, a set of drawings has been provided wherein, schematically and solely by way of a non-limiting example, a practical case of an embodiment is represented.
Figure 1 is a sectional view of the clamping and centering device in its extracted position without coupling the workpiece.
Figure 2 is a sectional view of the clamping and centering device in its retracted position without coupling the workpiece.
Figure 3 is a perspective view of the inside of the stop element, corresponding to the clamping system.
Figure 4 is a sectional view of the clamping and centering device in a first step of positioning the workpiece with the stopper element extracted.
Figure 5 is a sectional view of the clamping and centering device in a positioning step consecutive to that of Figure 4.
Figure 6 is a sectional view of the clamping and centering device in a step of fixing and coupling the workpiece to the centering body consecutive to that of Figure 5.
Figure 7 is a sectional view of the clamping and centering device in a retraction step of the assembly fixed to the end position.

### Description of a preferred embodiment

Various embodiments of the invention are described below, without limitation, for a better understanding of the indicated features.

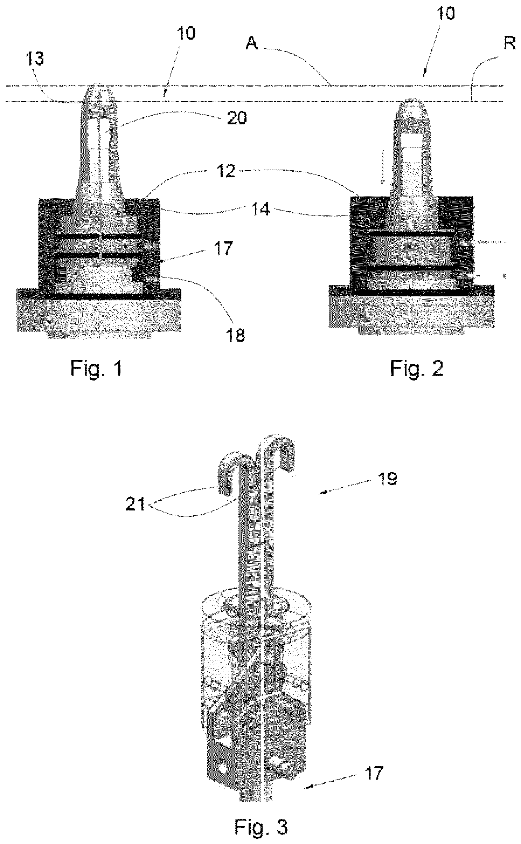

According to a preferred embodiment of the invention, and as can be seen in Figures 1 to 3, a clamping and centering device (10) for workpieces (11) to be manufactured or repaired is provided, installed in a support structure (12), by way of a support and worktable, wherein there can be multiple clamping and centering devices (10) to ensure the correct positioning of the workpiece (11) in said support structure (12). This assembly of devices (10) and support structure (12) form a production system wherein a positioning of the workpiece (11) is provided whereon to work, the workpiece (11) being correctly positioned on the reference axes that will allow the application of transformation processes of said workpiece (11) at correctly referenced points.

The clamping and centering device (10), as can be seen in Figure 1, has a stop element (13) emerging from the support surface (12) appreciably perpendicular to the plane of this support surface (12). This stop element (13) has a pin-like geometry or protuberance which is appreciably cylindrical and extends axially along a central axis (E) which, in the system configuration, coincides with the reference position wherein the workpiece (11) is to be positioned.

The stop element (13) may alternatively have other shapes or inclinations of its central axis (E) with respect to the support structure (12), depending on the shape of the workpiece.

The stop element (13) has a centering body (14) in its area closest to the support surface (12). This centering body (14) shows a truncated conical geometry, which increases its diameter as the centering body (14) is further away from the end of introduction of the workpiece (11) into the stop element (13).

This truncated conical shape of the centering body (14) may be varied as long as this centering body (14) keeps the central axis (E) equidistant from its outer surface, being able to be truncated pyramids with different geometries of its base, for example.

This outer surface of the centering body (14) comprises the coupling area (15) where the workpiece (11) will rest, which will depend specifically on a place on the outer surface of the centering body (14) of a greater or lesser diameter, according to the variation in size of each of the workpieces (11) and its centering areas (16), which are those that fit in said stop elements (13) and in the coupling area (15) of its centering body (14).

The workpiece (11) to be processed has several centering areas (16) in order to effectively position said workpiece in a given reference position and thus be able to apply automated or manual processes at points referenced to said determined reference position. To achieve this it is necessary that the central axis (E) of the centering body (14) is coaxial with the axis of the centering area (16).

This is achieved in the present clamping and centering device (10) thanks to this device (10) having a longitudinal displacement system (17) of the assembly of the stop element (13) with its centering body (14), between an extracted position (A) and a retracted position (R). This longitudinal displacement system (17) allows making a longitudinal displacement along the central axis (E) of extraction or retraction with respect to the support structure (12), varying the diameter of the section of the outer surface of the centering body (14) and, therefore, enabling the coupling of the centering area (16) of the workpiece (11) on the maximum diameter of the centering body (14) available.

According to the claimed invention, the longitudinal displacement system (17) displaces only the centering body (14), which has relative axial movement with respect to the rest of the stop element (13), which is fixed with respect to the support structure (12), serving as an initial positioning element, while the displacement of the centering body (14) ensures, once this initial positioning has been carried out, the correct centering of the workpiece (11).

The longitudinal displacement system (17) has a pneumatic piston system (18) that performs a linear movement that allows said displacement of the centering body (14) together with the stop element (13).

The stop element (13) also has inside a clamping system (19), formed by hooks (21) that emerge from the inside of the stop element (13) through openings (20) in its structure, moving in the direction of the centering body (14) to press and ensure the correct positioning of the workpiece in the coupling area (15) of the centering body (14), which corresponds to the maximum fitting diameter of the centering area (16) of the workpiece on said centering body (14).

This clamping system (19), as can be seen in Figure 3, performs its fixing movement thanks to the actuation of a linear displacement system and a set of articulation points. In this case, the same pneumatic piston system (18) is used as for the longitudinal displacement of the centering body (14) together with the stop element (13), saving space and mechanisms in each device (10).

The actuation of the longitudinal displacement system (17), as well as of the clamping system (19), is by means of a control system that receives the information of the status and position, both of the extraction/retraction of the centering body (14), as well as of the exit or not of the hooks (21) of the clamping system (19). This control system automates the extraction/retraction actuation of the centering body (14) and the actuation of the clamping system (19) leaving the coupled assembly of centering body (14) and workpiece (11) in the end fixing and supporting position in the support structure (12) of the system, not shown in the figures in a complete way, following the preferred method of operation for each configuration.

Alternatively to the above, the control system may be manual, adjusting the extraction/retraction of the stop element (13) and the actuation of the clamping system (19).

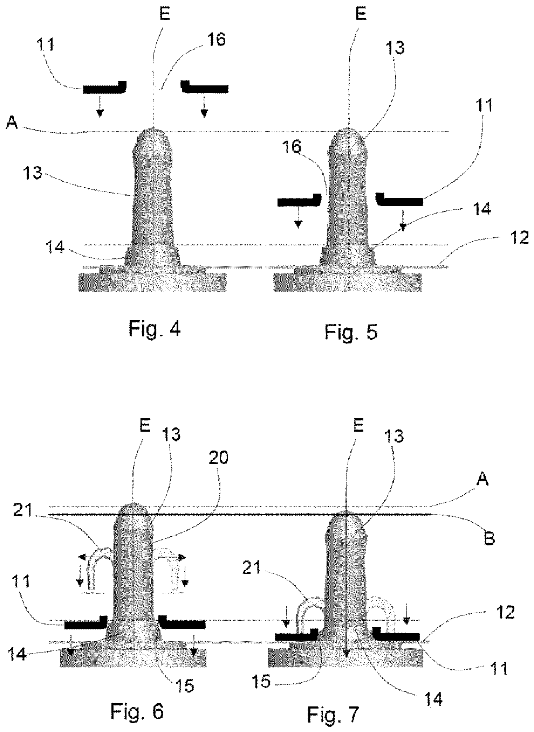

To perform the centering, in a preferred embodiment of the method of operation of the device, and as can be seen in Figures 4 to 7, it is based on a stop element (13) extracted practically in its entirety, as seen in Figures 1 and 4, i.e. in its extracted position (A) showing the majority of its centering body (14) and, therefore, all the different coupling points that there may be for the anchoring of the centering area (16) of the workpiece (11).

By inserting the workpiece (11) into the device through the opening that forms its centering area (16), as can be seen in figures 5 and 6, this workpiece lowers and reaches the centering body (14) by coupling to the maximum possible diameter of the latter (14), i.e. in the coupling area (15).

Once the workpiece (11) has passed the openings (20) of the clamping system (19) and reaches the centering body (14), the device control system (10) activates the exit of the hooks (21) to act against the workpiece (11) and ensure, by means of its pressure, the positioning of the workpiece (11) in the coupling area (15) of the centering body (14).

Finally, the control system, based on the monitoring of the extraction/retraction position of the centering body (14) and the position of the hooks (21) of the clamping system (19), determines, thanks to its processing means, the retraction that must be carried out to reach the end position (B) with the workpiece (11) fixed in the coupling area with the maximum possible diameter and with the workpiece supported on the support structure (12) without a pressure being exerted on the workpiece (11) that could mark or deform it, acting in this regard on the centering body (14) of the stop element (13) and the clamping system (19), by adjusting the pneumatic cylinder (18).

The displacement of the pneumatic cylinder (18) is performed by the regulation of the intake and outlet air to the longitudinal displacement system (17), which is performed automatically, in this preferred embodiment, by the control system.

Alternatively, the detection of the mechanical stop of the support structure (12) could be used to determine this end position (B) of the centering body (14), as well as other possible methods of detecting the relative position of the elements, either directly or indirectly by measuring electrical voltages of actuation of the elements or pressures of the pneumatic systems used, when performing various actions.

Alternatively, it is also possible to start from a centering body (14) initially retracted, with the stop element (13) also retracted or extracted, with the workpiece resting at the beginning on the support structure (12) without fixing it in its position, by the smallest radius of the stop element or by its absence. The control system at the time when the workpiece (11) is supported on the support structure (12) extracts the centering body (14) and/or the rest of the stop element (13), so that the inclined profile of the centering body (14) is positioning the centering area (16) of the workpiece (11) in the maximum diameter of said centering body (14) and therefore matching the axis of positioning of the workpiece (11) with the central axis (E) of the centering body (13) and the stop element (13).

Despite the fact that reference has been made to a specific embodiment of the invention, it is evident for a person skilled in the art that the device for clamping and centering workpieces in production systems, and the production system that includes it and the method of operation of said clamping and centering device described, are susceptible to numerous variations and modifications, and that all the aforementioned details can be replaced by other technically equivalent details without detracting from the scope of the protection defined by the attached claims.

## Claims

1. Device for clamping and centering workpieces in production systems, of those installed in a support structure (12), said support structure (12) being configured to support the workpiece (11) in the device, wherein the device comprises a stop element (13) arranged such that it protrudes axially from the support structure (12), and wherein the stop element (13) incorporates a clamping system (19) of the workpiece (11) to be centered with respect to its position in the support structure (12),
wherein the stop element (13) comprises, at least, a centering body (14) with a truncated conical shape configured to receive the coupling of a centering area (16) of the workpiece (11) by means of a coupling area (15) of the centering body (14), wherein the stop element (13) comprises a longitudinal displacement system (17) of at least the centering body (14), maintaining the same central axis (E) of its truncated conical shape throughout its longitudinal displacement;
wherein this longitudinal displacement is carried out at least between an extracted position (A) of the centering body (14) with respect to the support structure (12), wherein a greater radius of the coupling area (15) of the centering body (14) axially protrudes from the support structure (12), and a retracted position (R) of the centering body (14), wherein a smaller radius of the coupling area (15) of the centering body (14) axially protrudes from the support structure (12); and
wherein the end position (B) of clamping and centering the workpiece (11) with respect to the support structure (12) is a position that corresponds to either of said two positions (A,R) or an intermediate position between the extracted position (A) and the retracted position (R), wherein this end position (B) coincides with the position of fitting between the centering area (16) of the workpiece (11) with the coupling area (15) of the centering body (14) and, in turn, performs the support of the workpiece (11) on the support structure (12)
**characterized in that** the centering body (14) has a relative movement with respect to the stop element (13) by relative displacement with respect to the rest of the stop element (13), as well as coaxially on the outside of this stop element (13) fixed to the support structure (12).

2. Device for clamping and centering workpieces in production systems, according to claim 1, wherein the longitudinal displacement system (17) and the clamping system (19) of the workpiece (11) are governed by an automated control system that receives information on the status and position thereof, said automated control system comprising one or more processing elements configured to receive and process said external information and/or predetermined data and communicate instructions both to said longitudinal displacement system (17) and to the clamping system (19) of the workpiece (11) to be fixed, wherein said control system determines the end position (B) of clamping and centering the workpiece (11) with respect to the support structure (12).

3. Device for clamping and centering workpieces in production systems, according to claim 2, wherein the control system that determines the end position (B) of clamping and centering the workpiece (11) with respect to the support structure (12), comprises a device for detecting the position of the longitudinal displacement system (17) of the centering body (14) of the stop element (13), as well as the position and pressure exerted by the clamping system (19) that presses the workpiece (11) against the coupling area (15) of the centering body (14).

4. Device for clamping and centering workpieces in production systems, according to claim 3, wherein the device for detecting the position of the longitudinal displacement system (17) of the centering body (14) and/or of the position of the clamping system, when in the external fixing position, is based on a position monitoring system by reed sensors.

5. Device for clamping and centering workpieces in production systems, according to claim 1, wherein the longitudinal displacement system (17) of the centering body (14) is governed by a manual actuation system for adjusting the height of the centering body (14) and for actuating its clamping system (19).

6. Device for clamping and centering workpieces in production systems, according to any of the preceding claims, wherein the stop element (13) comprises, either inside or forming part of its outer structure, the clamping system (19) of the workpiece (11), wherein this clamping system (19) can move from its non- clamping position into the stop element (13), to an outer fixing position wherein pressure is applied against the workpiece (11) towards the coupling area (15) of the centering body (14).

7. Device for clamping and centering workpieces in production systems, according to any of claims 2, 3, 4 or 6, wherein the longitudinal displacement system (17) of the centering body (14) of the stop element (13) and/or the clamping system (19) in its mechanism for opening/closing the anchoring elements comprise a pneumatic cylinder system, which allows this displacement of the centering body (14) and/or this opening / closing movement of the anchoring elements following a coaxial guide to the axis of the stop element (13), with the control system automatically regulating the air pressure that moves the corresponding plunger or element integrally with the centering body (14) of the pneumatic cylinder.

8. Production system, which has a support structure (12) for the positioning of workpieces (11) whereon to perform any operation, and which comprises at least one clamping and centering device (10), **characterised in that** the at least one clamping and centering device (10) comprises the features of any of the preceding claims from 1 to 7.

9. Method for operating a clamping and centering device, such as that described in claims 1 to 7, **characterised in that** the clamping and centering device (10) performs at least the following steps:
a) placing the workpiece (11), whereon it is intended to work in the production system, with its centering area (16) on the stop element (13);
b) when the workpiece (11) is in the actuation area of the clamping system (19) of the stop element (13), actuate this extraction of the clamping system (19) so as to press the workpiece (11) in the direction towards the support structure (12), so that the centering area (16) of the workpiece (11) is coupled to the coupling area (15) of the centering body (14) in the fitting position of this centering area (Z') at the greatest possible radius of the truncated conical centering body (14), corresponding to the coincident dimension of this centering area (16) of the workpiece (11) with the coupling area (15); and
c) retracting the centering body (14) of the stop element (13) to the end position (B) of the workpiece (11) resting on the support structure (12) maintaining the centering area (16) of the workpiece (11) coupled to the coupling area (15) of the centering body (13) in the fitting position of this centering area (16) in the greatest possible radius of the centering body (14).

10. Method of operation of a clamping and centering device, according to claim 9, wherein prior to the placement of the workpiece (11) in the stop element (13) of the clamping and centering device (10), the centering body (14) is extracted to its extracted position (A) with respect to the support structure (12), so that at the time of placement of the workpiece (11) in the production system, this workpiece (11) will be located on the centering body (14), continuing with its consecutive stages until its end position in the support structure.

11. Method of operating a clamping and centering device, according to claim 9, wherein initially the centering body (14) is arranged in its retracted position, so that after the placement of the workpiece (11) in the stop element (13) of the clamping and centering device (10) and before performing the actuation of the clamping system (19), the extraction is performed of the centering body (14) from the retracted initial position (R) to an intermediate extracted position between the fully extracted position (A) and the retracted position (R) with respect to the support structure (12), the workpiece (11) being coupled in the coupling area (15) of the centering body (14), and allowing the actuation of the clamping system (19) and continuing with its consecutive stages until its end position (B) in the support structure (12).

12. Method of operation of a clamping and centering device, according to any one of claims 9 to 11, wherein at least the steps involving the extraction and retraction displacement of the centering body (14) of the stop element (13) and the extraction of the clamping system (19) are governed by an automated control system.

13. Method of operating a centering device, according to claim 12, wherein the end position (B) of clamping and centering the workpiece (11) in the retraction displacement of the centering body (14) of the stop element (13), once the clamping system (19) presses the workpiece (11) against its coupling area (15), is determined by the control system through the information received, at least, from the position detection device of the longitudinal displacement system (17) of the centering body (14) of the stop element (13), as well as from the position of the clamping system (19) pressing the workpiece (11) against the coupling area (15) of the centering body (14).

## Patentansprüche

1. Vorrichtung zum Einspannen und Zentrieren von Werkstücken in Produktionssystemen, von denen, die in einer Stützstruktur (12) installiert sind, wobei die Stützstruktur (12) konfiguriert ist, um das Werkstück (11) in der Vorrichtung zu stützen, wobei die Vorrichtung ein Anschlagelement (13), das derart angeordnet ist, dass es aus der Stützstruktur (12) axial hervorsteht, umfasst, und wobei das Anschlagelement (13) ein Einspannsystem (19) des Werkstücks (11), das hinsichtlich seiner Position in der Stützstruktur (12) zentriert werden soll, einschließt,
wobei das Anschlagelement (13), mindestens, einen Zentrierkörper (14) mit einer abgestumpften konischen Gestalt, der konfiguriert ist, um die Kopplung eines Zentrierbereichs (16) des Werkstücks (11) mittels eines Kopplungsbereichs (15) des Zentrierkörpers (14) aufzunehmen, umfasst, wobei das Anschlagelement (13) ein Längsverschiebungssystem (17) von mindestens dem Zentrierkörper (14) umfasst, wobei dieselbe Mittelachse (E) seiner abgestumpften konischen Gestalt während seiner Längsverschiebung beibehalten wird;
wobei diese Längsverschiebung mindestens zwischen einer ausgezogenen Position (A) des Zentrierkörpers (14) hinsichtlich der Stützstruktur (12), wobei ein größerer Radius des Kopplungsbereichs (15) des Zentrierkörpers (14) aus der Stützstruktur (12) axial hervorsteht, und einer eingezogenen Position (R) des Zentrierkörpers (14), wobei ein kleinerer Radius des Kopplungsbereichs (15) des Zentrierkörpers (14) aus der Stützstruktur (12) axial hervorsteht, ausgeführt wird; und
wobei die Endposition (B) des Einspannens und Zentrierens des Werkstücks (11) hinsichtlich des Stützstruktur (12) eine Position ist, die entweder einer der zwei Positionen (A,R) oder einer zwischenliegenden Position zwischen der ausgezogenen Position (A) und der eingezogenen Position (R) entspricht, wobei diese Endposition (B) mit der Position eines Einpassens zwischen dem Zentrierbereich (16) des Werkstücks (11) mit dem Kopplungsbereich (15) des Zentrierkörpers (14) übereinstimmt und wiederum das Stützen des Werkstücks (11) auf der Stützstruktur (12) durchführt,
**dadurch gekennzeichnet, dass** der Zentrierkörper (14) eine Relativbewegung hinsichtlich des Anschlagelements (13) durch Relativverschiebung hinsichtlich des Rests des Anschlagelements (13), sowie koaxial auf der Außenseite dieses Anschlagelements (13) an der Stützstruktur (12) fixiert, aufweist.

2. Vorrichtung zum Einspannen und Zentrieren von Werkstücken in Produktionssystemen nach Anspruch 1, wobei das Längsverschiebungssystem (17) und das Einspannsystem (19) des Werkstücks (11) durch ein automatisiertes Steuersystem, das Informationen über den Status und die Position davon empfängt, geregelt werden, das automatisierte Steuersystem umfassend ein oder mehrere Verarbeitungselemente, die konfiguriert sind, um die externen Informationen und/oder zuvor bestimmte Daten zu empfangen und zu verarbeiten und Anweisungen sowohl an das Längsverschiebungssystem (17) als auch an das Einspannsystem (19) des Werkstücks (11), das fixiert werden soll, zu übermitteln, wobei das Steuersystem die Endposition (B) des Einspannens und Zentrierens des Werkstücks (11) hinsichtlich der Stützstruktur (12) bestimmt.

3. Vorrichtung zum Einspannen und Zentrieren von Werkstücken in Produktionssystemen nach Anspruch 2, wobei das Steuersystem, das die Endposition (B) des Einspannens und Zentrierens des Werkstücks (11) hinsichtlich der Stützstruktur (12) bestimmt, eine Vorrichtung zum Erfassen der Position des Längsverschiebungssystems (17) des Zentrierkörpers (14) des Anschlagelements (13) sowie der Position und des Drucks, der durch das Einspannsystem (19), das das Werkstück (11) gegen den Kopplungsbereich (15) des Zentrierkörpers (14) drückt, ausgeübt wird, umfasst.

4. Vorrichtung zum Einspannen und Zentrieren von Werkstücken in Produktionssystemen nach Anspruch 3, wobei die Vorrichtung zum Erfassen der Position des Längsverschiebungssystems (17) des Zentrierkörpers (14) und/oder der Position des Einspannsystems, wenn es in der externen Fixierposition ist, auf einem Positionsüberwachungssystem durch Reed-Sensoren basiert.

5. Vorrichtung zum Einspannen und Zentrieren von Werkstücken in Produktionssystemen nach Anspruch 1, wobei das Längsverschiebungssystem (17) des Zentrierkörpers (14) durch ein manuelles Betätigungssystem zum Einstellen der Höhe des Zentrierkörpers (14) und zum Betätigen seines Einspannsystems (19) geregelt wird.

6. Vorrichtung zum Einspannen und Zentrieren von Werkstücken in Produktionssystemen nach einem der vorstehenden Ansprüche, wobei das Anschlagelement (13), entweder innerhalb oder Teil seiner Außenstruktur bildend, das Einspannsystem (19) des Werkstücks (11) umfasst, wobei sich dieses Einspannsystem (19) von seiner Nicht-Einspannposition in das Anschlagelement (13) in eine Außenfixierungsposition bewegen kann, wobei Druck gegen das Werkstück (11) zu dem Kopplungsbereich (15) des Zentrierkörpers (14) aufgebracht wird.

7. Vorrichtung zum Einspannen und Zentrieren von Werkstücken in Produktionssystemen nach einem der Ansprüche 2, 3, 4 oder 6, wobei das Längsverschiebungssystem (17) des Zentrierkörpers (14) des Anschlagelements (13) und/oder das Einspannsystem (19) in seinem Mechanismus zum Öffnen/Schließen der Verankerungselemente ein Pneumatikzylindersystem, das diese Verschiebung des Zentrierkörpers (14) und/oder diese Öffnungs-/Schließbewegung der Verankerungselemente nach einer koaxialen Führung zu der Achse des Anschlagelements (13) ermöglicht, umfassen, wobei das Steuersystem den Luftdruck, der den entsprechenden Kolben oder das entsprechende Element mit dem Zentrierkörper (14) des Pneumatikzylinders integral bewegt, automatisch reguliert.

8. Produktionssystem, das eine Stützstruktur (12) für die Positionierung von Werkstücken (11), worauf ein beliebiger Vorgang durchgeführt werden soll, aufweist, und das mindestens eine Einpann- und Zentriervorrichtung (10) umfasst, **dadurch gekennzeichnet, dass** die mindestens eine Einspann- und Zentriervorrichtung (10) die Merkmale eines der vorstehenden Ansprüche 1 bis 7 umfasst.

9. Verfahren zum Betreiben einer Einspann- und Zentriervorrichtung, wie sie in den Ansprüchen 1 bis 7 beschrieben ist, **dadurch gekennzeichnet, dass** die Einspann- und Zentriervorrichtung (10) mindestens die folgenden Schritte durchführt:
a) Platzieren des Werkstücks (11), worauf es in dem Produktionssystem arbeiten soll, mit seinem Zentrierbereich (16) auf dem Anschlagelement (13);
b) wenn das Werkstück (11) in dem Betätigungsbereich des Einspannsystems (19) des Anschlagelements (13) ist, Betätigen dieser Ausziehung des Einspannsystem (19), um das Werkstück (11) in die Richtung zu der Stützstruktur (12) zu drücken, sodass der Zentrierbereich (16) des Werkstücks (11) mit den Kopplungsbereich (15) des Zentrierkörpers (14) in der Einpassposition dieses Zentrierbereichs (Z') bei dem größtmöglichen Radius des abgestumpften konischen Zentrierkörpers (14) gekoppelt ist, wobei der übereinstimmenden Abmessung dieses Zentrierbereichs (16) des Werkstücks (11) mit dem Kopplungsbereich (15) entsprochen wird; und
c) Einziehen des Zentrierkörpers (14) des Anschlagelements (13) in die Endposition (B) des Werkstücks (11), das auf der Stützstruktur (12) aufliegt, wobei der Zentrierbereich (16) des Werkstücks (11), gekoppelt mit dem Kopplungsbereich (15) des Zentrierkörpers (13) in der Einpassposition dieses Zentrierbereichs (16) in dem größtmöglichen Radius des Zentrierkörpers (14) beibehalten wird.

10. Betriebsverfahren einer Einspann- und Zentriervorrichtung nach Anspruch 9, wobei vor der Platzierung des Werkstücks (11) in dem Anschlagelement (13) der Einspann- und Zentriervorrichtung (10) der Zentrierkörper (14) in seine ausgezogene Position (A) hinsichtlich der Stützstruktur (12) ausgezogen wird, sodass zu dem Zeitpunkt der Platzierung des Werkstücks (11) in dem Produktionssystem sich dieses Werkstück (11) auf dem Zentrierkörper (14) befinden wird, wobei mit seinen aufeinanderfolgenden Stufen bis zu seiner Endposition in der Stützstruktur fortgefahren wird.

11. Verfahren zum Betreiben einer Einspann- und Zentriervorrichtung nach Anspruch 9, wobei anfangs der Zentrierkörper (14) in seiner eingezogenen Position angeordnet ist, sodass nach der Platzierung des Werkstücks (11) in dem Anschlagelement (13) der Einspann- und Zentriervorrichtung (10) und vor dem Durchführen der Betätigung des Einspannsystems (19) die Ausziehung des Zentrierkörpers (14) aus der eingezogenen Anfangsposition (R) in eine zwischenliegende ausgezogene Position zwischen der vollständig ausgezogenen Position (A) und der eingezogenen Position (R) hinsichtlich der Stützstruktur (12) durchgeführt wird, wobei das Werkstück (11) in dem Kopplungsbereich (15) des Zentrierkörpers (14) gekoppelt wird und die Betätigung des Einspannsystems (19) ermöglicht wird und mit seinen aufeinanderfolgenden Stufen bis zu seiner Endposition (B) in der Stützstruktur (12) fortgefahren wird.

12. Betriebsverfahren einer Einspann- und Zentriervorrichtung nach einem der Ansprüche 9 bis 11, wobei mindestens die Schritte, die die Ausziehungs- und Einziehungsverschiebung des Zentrierkörpers (14) des Anschlagelements (13) und das Ausziehen des Einspannsystem (19) betreffen, durch ein automatisiertes Steuersystem geregelt werden.

13. Verfahren zum Betreiben einer Zentriervorrichtung nach Anspruch 12, wobei die Endposition (B) des Einspannens und Zentrierens des Werkstücks (11) in der Einziehungsverschiebung des Zentrierkörpers (14) des Anschlagelements (13), sobald das Einspannsystem (19) das Werkstück (11) gegen seinen Kopplungsbereich (15) drückt, durch das Steuersystem durch die Informationen, die mindestens von der Positionserfassungsvorrichtung des Längsverschiebungssystems (17) des Zentrierkörpers (14) des Anschlagelements (13) sowie von der Position des Einspannsystems (19), das das Werkstück (11) gegen den Kopplungsbereich (15) des Zentrierkörpers (14) drückt, bestimmt wird.

## Revendications

1. Dispositif de serrage et de centrage de pièces dans des systèmes de production, de ceux installés dans une structure de support (12), ladite structure de support (12) étant conçue pour supporter la pièce (11) dans le dispositif, dans lequel le dispositif comprend un élément d'arrêt (13) agencé de telle sorte qu'il dépasse axialement de la structure de support (12), et dans lequel l'élément d'arrêt (13) incorpore un système de serrage (19) de la pièce (11) devant être centré par rapport à sa position dans la structure de support (12),
dans lequel l'élément d'arrêt (13) comprend, au moins, un corps de centrage (14) de forme tronconique conçu pour recevoir l'accouplement d'une zone de centrage (16) de la pièce (11) au moyen d'une zone d'accouplement (15) du corps de centrage (14), dans lequel l'élément d'arrêt (13) comprend un système de déplacement longitudinal (17) d'au moins le corps de centrage (14), maintenant le même axe central (E) de sa forme tronconique tout au long de son déplacement longitudinal ;
dans lequel ce déplacement longitudinal est effectué au moins entre une position extraite (A) du corps de centrage (14) par rapport à la structure de support (12), dans lequel un rayon plus grand de la zone d'accouplement (15) du corps de centrage (14) dépasse axialement de la structure de support (12), et une position rétractée (R) du corps de centrage (14), dans lequel un rayon plus petit de la zone d'accouplement (15) du corps de centrage (14) dépasse axialement de la structure de support (12) ; et
dans lequel la position finale (B) de serrage et de centrage de la pièce (11) par rapport à la structure de support (12) est une position qui correspond soit à l'une ou l'autre desdites deux positions (A, R), soit à une position intermédiaire entre la position extraite (A) et la position rétractée (R), dans lequel cette position finale (B) coïncide avec la position d'ajustement entre la zone de centrage (16) de la pièce (11) avec la zone d'accouplement (15) du corps de centrage (14) et, à son tour, réalise le support de la pièce (11) sur la structure de support (12)
**caractérisé en ce que** le corps de centrage (14) a un mouvement relatif par rapport à l'élément d'arrêt (13) par déplacement relatif par rapport au reste de l'élément d'arrêt (13), ainsi que coaxialement sur l'extérieur de cet élément d'arrêt (13) fixé à la structure de support (12).

2. Dispositif de serrage et de centrage de pièces dans des systèmes de production, selon la revendication 1, dans lequel le système de déplacement longitudinal (17) et le système de serrage (19) de la pièce (11) sont régis par un système de commande automatisé qui reçoit des informations sur l'état et la position de celui-ci, ledit système de commande automatisé comprenant un ou plusieurs éléments de traitement conçus pour recevoir et traiter lesdites informations externes et/ou données prédéterminées et communiquer des instructions à la fois audit système de déplacement longitudinal (17) et au système de serrage (19) de la pièce (11) à fixer, dans lequel ledit système de commande détermine la position finale (B) de serrage et de centrage de la pièce (11) par rapport au structure de support (12).

3. Dispositif de serrage et de centrage de pièces dans des systèmes de production, selon la revendication 2, dans lequel le système de commande qui détermine la position finale (B) de serrage et de centrage de la pièce (11) par rapport à la structure de support (12), comprend un dispositif pour détecter la position du système de déplacement longitudinal (17) du corps de centrage (14) de l'élément d'arrêt (13), ainsi que la position et la pression exercées par le système de serrage (19) qui presse la pièce (11) contre la zone d'accouplement (15) du corps de centrage (14).

4. Dispositif de serrage et de centrage de pièces dans des systèmes de production, selon la revendication 3, dans lequel le dispositif de détection de la position du système de déplacement longitudinal (17) du corps de centrage (14) et/ou de la position du système de serrage, lorsqu'il est en position de fixation externe, est fonction d'un système de surveillance de position par des capteurs à lames souples.

5. Dispositif de serrage et de centrage de pièces dans des systèmes de production, selon la revendication 1, dans lequel le système de déplacement longitudinal (17) du corps de centrage (14) est régi par un système d'actionnement manuel permettant de régler la hauteur du corps de centrage (14) et d'actionner son système de serrage (19).

6. Dispositif de serrage et de centrage de pièces dans des systèmes de production, selon l'une quelconque des revendications précédentes, dans lequel l'élément d'arrêt (13) comprend, soit à l'intérieur, soit en faisant partie de sa structure externe, le système de serrage (19) de la pièce (11), dans lequel ce système de serrage (19) peut se déplacer de sa position de non-serrage dans l'élément d'arrêt (13), jusqu'à une position de fixation externe dans laquelle une pression est appliquée contre la pièce (11) vers la zone d'accouplement (15) du corps de centrage (14).

7. Dispositif de serrage et de centrage de pièces dans des systèmes de production, selon l'une quelconque des revendications 2, 3, 4 ou 6, dans lequel le système de déplacement longitudinal (17) du corps de centrage (14) de l'élément d'arrêt (13) et/ou le système de serrage (19) dans son mécanisme d'ouverture/fermeture des éléments d'ancrage comprennent un système de cylindre pneumatique, qui permet ce déplacement du corps de centrage (14) et/ou ce mouvement d'ouverture/fermeture des éléments d'ancrage suivant un guide coaxial par rapport à l'axe de l'élément d'arrêt (13), le système de commande régulant automatiquement la pression d'air qui déplace le piston ou l'élément correspondant d'un seul tenant avec le corps de centrage (14) du cylindre pneumatique.

8. Système de production, qui a une structure de support (12) pour le positionnement de pièces (11) sur lesquelles effectuer une quelconque opération, et qui comprend au moins un dispositif de serrage et de centrage (10),
**caractérisé en ce que** l'au moins un dispositif de serrage et de centrage (10) comprend les caractéristiques selon l'une quelconque des revendications précédentes de 1 à 7.

9. Procédé de fonctionnement d'un dispositif de serrage et de centrage, tel que celui décrit dans les revendications 1 à 7, **caractérisé en ce que** le dispositif de serrage et de centrage (10) réalise au moins les étapes suivantes :
a) placer la pièce (11), sur laquelle on prévoit de travailler dans le système de production, avec sa zone de centrage (16) sur l'élément d'arrêt (13) ;
b) lorsque la pièce (11) se trouve dans la zone d'actionnement du système de serrage (19) de l'élément d'arrêt (13), actionner cette extraction du système de serrage (19) de manière à presser la pièce (11) dans la direction vers la structure de support (12), de sorte que la zone de centrage (16) de la pièce (11) est accouplée à la zone d'accouplement (15) du corps de centrage (14) dans la position d'ajustement de cette zone de centrage (Z') au rayon le plus grand possible du corps de centrage (14) tronconique, correspondant à la dimension coïncidente de cette zone de centrage (16) de la pièce (11) avec la zone d'accouplement (15) ; et
c) rétracter le corps de centrage (14) de l'élément d'arrêt (13) vers la position d'extrémité (B) de la pièce (11) reposant sur la structure de support (12), maintenant la zone de centrage (16) de la pièce (11) accouplée à la zone d'accouplement (15) du corps de centrage (13) dans la position d'ajustement de cette zone de centrage (16) dans le rayon le plus grand possible du corps de centrage (14).

10. Procédé de fonctionnement d'un dispositif de serrage et de centrage, selon la revendication 9, dans lequel avant la mise en place de la pièce (11) dans l'élément d'arrêt (13) du dispositif de serrage et de centrage (10), le corps de centrage (14) est extrait jusqu'à sa position extraite (A) par rapport à la structure de support (12), de sorte qu'au moment de la mise en place de la pièce (11) dans le système de production, cette pièce (11) sera située sur le corps de centrage (14), poursuivant ses étapes consécutives jusqu'à sa position finale dans la structure de support.

11. Procédé de fonctionnement d'un dispositif de serrage et de centrage, selon la revendication 9, dans lequel initialement le corps de centrage (14) est agencé dans sa position rétractée, de sorte qu'après la mise en place de la pièce (11) dans l'élément d'arrêt (13) du dispositif de serrage et de centrage (10) et avant la réalisation de l'actionnement du système de serrage (19), l'extraction du corps de centrage (14) est effectuée à partir de la position initiale rétractée (R) jusqu'à une position d'extraction intermédiaire entre la position complètement extraite (A) et la position rétractée (R) par rapport à la structure de support (12), la pièce (11) étant accouplée dans la zone d'accouplement (15) du corps de centrage (14), et permettant l'actionnement du système de serrage (19) et poursuivant ses étapes consécutives jusqu'à sa position finale (B) dans la structure de support (12).

12. Procédé de fonctionnement d'un dispositif de serrage et de centrage, selon l'une quelconque des revendications 9 à 11, dans lequel au moins les étapes impliquant le déplacement d'extraction et de rétraction du corps de centrage (14) de l'élément d'arrêt (13) et l'extraction du système de serrage (19) sont régies par un système de commande automatisé.

13. Procédé de fonctionnement d'un dispositif de centrage, selon la revendication 12, dans lequel la position finale (B) de serrage et de centrage de la pièce (11) dans le déplacement de rétraction du corps de centrage (14) de l'élément d'arrêt (13), une fois que le système de serrage (19) presse la pièce (11) contre sa zone d'accouplement (15), est déterminé par le système de commande à travers les informations reçues, au moins, à partir du dispositif de détection de position du système de déplacement longitudinal (17) du corps de centrage (14) de l'élément d'arrêt (13), ainsi qu'à partir de la position du système de serrage (19) pressant la pièce (11) contre la zone d'accouplement (15) du corps de centrage (14).
